(19) **Europäisches Patentamt / European Patent Office / Office européen des brevets**

(11) **EP 4 708 399 A1**

(12) **EUROPEAN PATENT APPLICATION**
published in accordance with Art. 153(4) EPC

(43) Date of publication:
**11.03.2026 Bulletin 2026/11**

(21) Application number: **24823638.2**

(22) Date of filing: **07.06.2024**

(51) International Patent Classification (IPC):
$H01M\ 4/525^{(2010.01)}$    $H01M\ 4/505^{(2010.01)}$
$H01M\ 4/131^{(2010.01)}$    $H01M\ 10/052^{(2010.01)}$
$H01M\ 4/02^{(2006.01)}$

(52) Cooperative Patent Classification (CPC):
H01M 4/02; H01M 4/131; H01M 4/505;
H01M 4/525; H01M 10/052; Y02E 60/10

(86) International application number:
**PCT/KR2024/007825**

(87) International publication number:
**WO 2024/258118 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 KR 20230076837**

(71) Applicant: **LG Chem, Ltd.**
**Seoul 07336 (KR)**

(72) Inventors:
• **PARK, Hyun Ah**
**Daejeon 34122 (KR)**
• **JUNG, Won Sig**
**Daejeon 34122 (KR)**
• **KIM, Yern Seung**
**Daejeon 34122 (KR)**
• **JEONG, Jong Seok**
**Daejeon 34122 (KR)**
• **KIM, Jong Pil**
**Daejeon 34122 (KR)**
• **PARK, Jung Won**
**Daejeon 34122 (KR)**
• **KIM, Sang Hun**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, AND POSITIVE ELECTRODE AND LITHIUM SECONDARY BATTERY EACH COMPRISING SAME**

(57) The present invention relates to a positive electrode active material, and a positive electrode and a lithium secondary battery which include the same, and more particularly, to a positive electrode active material including a lithium composite transition metal oxide in the form of a single particle, wherein the lithium composite transition metal oxide satisfies Equation 1 described herein, and a positive electrode and a lithium secondary battery which include the same.

[FIG. 1]

(A)

(B)

**Description**

### TECHNICAL FIELD

### Cross-reference to Related Applications

The present application claims the benefit of the priority of Korean Patent Application No. 10-2023-0076837, filed on June 15, 2023, which is hereby incorporated by reference in its entirety.

### Technical Field

The present invention relates to a positive electrode active material, and a positive electrode and a lithium secondary battery which include the same. The present invention relates more particularly to a positive electrode active material including a lithium composite transition metal oxide in the form of a single particle, and a positive electrode and a lithium secondary battery which include the same.

### BACKGROUND ART

There has been a rapid rise in demand for secondary batteries as an energy source lately with the growing demand and technological advancements in mobile devices and electric vehicles. Among such secondary batteries, lithium secondary batteries having high energy density and voltage, long cycle life, and low self-discharging rate have been commercially available and widely used.

Lithium transition metal oxides, such as lithium cobalt oxide such as $LiCoO_2$, lithium nickel oxide such as $LiNiO_2$, lithium manganese oxide such as $LiMnO_2$ or $LiMn_2O_4$, or lithium iron phosphate such as $LiFePO_4$, have been developed as a positive electrode active material of lithium secondary batteries, and lithium composite transition metal oxides including two or more types of transition metals, for example, $Li[Ni_aCo_bMn_c]O_2$, $Li[Ni_aCo_bAl_c]O_2$, and $Li[Ni_aCo_bMn_cAl_d]O_2$, have been developed and now widely used.

The lithium transition metal oxides including two or more types of transition metals, which have been developed up until now, are typically prepared in the form of a spherical secondary particle in which tens to hundreds of primary particles are aggregated, and nowadays, efforts to develop a positive electrode active material in the form of a single particle are intensifying to address the structural and thermal stability issues of a positive electrode active material in the form of a secondary particle. Specifically, when the positive electrode active material in the form of a secondary particle is applied to a lithium secondary battery, a significant amount of gas is generated, resulting in battery swelling, and elevating the nickel content in the positive electrode active material to achieve high capacity also increases the risk of fire. Consequently, the demand for the development of a single-particle positive electrode active material exhibiting excellent stability is on the rise.

Accordingly, there is a need to develop a single-particle positive electrode active material provided with excellent stability and capable of enhancing a wide range of battery performance aspects when applied to batteries.

### DISCLOSURE OF THE INVENTION

### TECHNICAL PROBLEM

The present invention is designed to overcome the limitations described above, and thus, an aspect of the present invention provides a positive electrode active material including a single-particle lithium composite transition metal oxide exhibiting excellent structural stability and capable of enhancing battery capacity and lifetime when applied to batteries.

Another aspect of the present invention provides a positive electrode and a lithium secondary battery which include the positive electrode active material and thus have enhanced performance.

### TECHNICAL SOLUTION

The present invention provides a positive electrode active material, and a positive electrode and a lithium secondary battery which include the same.

(1) According to an aspect of the present invention, provided is a positive electrode active material including a lithium composite transition metal oxide in the form of a single particle, wherein the lithium composite transition metal oxide satisfies Equation 1 below.

[Equation 1]

$$0.4 < \frac{D_{EBSD}}{D_{SEM}} < 1.0$$

In Equation 1 above,

$D_{EBSD}$ is an average particle size (unit: $\mu$m) of a grain recognized when observing the lithium composite transition metal oxide through EBSD, and

$D_{SEM}$ is an average particle size (unit: $\mu$m) of a smallest unit particle recognized when observing the lithium composite transition metal oxide through SEM.

(2) The present invention provides the positive electrode active material according to (1) above, wherein the lithium composite transition metal oxide further satisfies Equation 2 below.

[Equation 2]

$$0.5 < \frac{D_{EBSD}/D_{SEM}}{[Ni]} < 1.3$$

In Equation 2,

$D_{EBSD}$ is an average particle size (unit: $\mu$m) of a grain recognized when observing the lithium composite transition metal oxide through EBSD,

$D_{SEM}$ is an average particle size (unit: $\mu$m) of a smallest unit particle recognized when observing the lithium composite transition metal oxide through SEM, and

[Ni] is a molar ratio of nickel with respect to the total moles of transition metals excluding lithium.

(3) The present invention provides the positive electrode active material according to (1) or (2) above, wherein the $D_{EBSD}/D_{SEM}$ has a value of greater than 0.4 and 0.9 or less.

(4) The present invention provides the positive electrode active material according to any one of (1) to (3) above, wherein the $D_{EBSD}$ is in a range of 1 $\mu$m to 5 $\mu$m.

(5) The present invention provides the positive electrode active material according to any one of (1) to (4) above, wherein the $D_{SEM}$ is in a range of 1 $\mu$m to 8 $\mu$m.

(6) The present invention provides the positive electrode active material according to any one of (1) to (5) above, wherein the lithium composite transition metal oxide has a nickel content of 60 mol% or greater with respect to the total moles of transition metals excluding lithium.

(7) The present invention provides the positive electrode active material according to any one of (1) to (6) above, wherein the lithium composite transition metal oxide has a composition represented by Formula 1 below.

[Formula 1]  $Li_x[Ni_aCo_bM1_cM2_d]O_2$

In Formula 1 above,

M1 is at least one selected from Mn and Al,

M2 is at least one selected from Zr, B, W, Mo, Cr, Nb, Mg, Hf, Ta, La, Ti, Sr, Ba, Ce, Sn, Y, V, Ca, Zn, F, P, and S, and $0.9 \leq x \leq 1.2$, $0.6 \leq a < 1$, $0 \leq b \leq 0.4$, $0 \leq c \leq 0.4$, and $0 \leq d \leq 0.4$ are satisfied.

(8) The present invention provides the positive electrode active material according to any one of (1) to (7) above, wherein the lithium composite transition metal oxide has an average particle size ($D_{50}$) of 1 $\mu$m to 10 $\mu$m.

(9) According to another aspect of the present invention, provided is a positive electrode including the positive electrode active material according to any one of (1) to (8) above.

(10) According to another aspect of the present invention, provided is a lithium secondary battery including the positive electrode according to (9) above.

**ADVANTAGEOUS EFFECTS**

A positive electrode active material of the present invention includes a lithium composite transition metal oxide in the form of a single particle and satisfies Equation 1 described herein, and thus may improve the capacity, lifetime, and the like of a lithium secondary battery.

**BRIEF DESCRIPTION OF THE DRAWINGS**

FIG. 1 is a segmented image obtained by image-processing an SEM image (A) of a positive electrode active material of Example 1 and an EBSD IPF map image (B);
FIG. 2 is a segmented image obtained by image-processing an SEM image (A) of a positive electrode active material of Example 2 and an EBSD IPF map image (B); and
FIG. 3 is a segmented image obtained by image-processing an SEM image (A) of a positive electrode active material of Comparative Example 1 and an EBSD IPF map image (B).

**BEST MODE FOR CARRYING OUT THE INVENTION**

Hereinafter, the present invention will be described in detail to aid in understanding of the present invention.
It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.
Herein, a 'single particle form' is a concept in contrast to a spherical secondary particle form in which tens to hundreds of primary particles are aggregated, and indicates a form made up of 10 or fewer primary particles. Specifically, the 'single particle form' may be a single particle form made up of one primary particle, or may be a secondary particle form in which 2 to 10 primary particles, specifically 2 to 5 primary particles, are aggregated.
Herein, a 'primary particle' indicates a smallest unit of particles recognized when observing a positive electrode active material through a scanning electron microscope (SEM), and a 'secondary particle' indicates a secondary structure where a plurality of primary particles are aggregated.
Herein, an average particle size ($D_{50}$) may be defined as a particle size at a cumulative volume of 50% in a particle size distribution curve of particles. The average particle size ($D_{50}$) may be measured, for example, through a laser diffraction method, and more specifically, in the measuring, lithium composite transition metal oxides are dispersed in a dispersion medium, introduced into a commercially available laser diffraction particle size measuring device (e.g., Microtrac Mt 3000), irradiated with ultrasonic waves of about 28 kHz at a power of 60 W, and then an average particle size ($D_{50}$) at 50% of the particle size distribution in the measuring device may be calculated.

**Positive electrode active material**

The present invention provides a positive electrode active material including a lithium composite transition metal oxide in the form of a single particle, and the lithium composite transition metal oxide satisfies Equation 1 below.

$$[\text{Equation 1}]$$

$$0.4 < \frac{D_{EBSD}}{D_{SEM}} < 1.0$$

In Equation 1 above,

$D_{EBSD}$ is an average particle size (unit: $\mu$m) of a grain recognized when observing the lithium composite transition metal oxide through EBSD, and
$D_{SEM}$ is an average particle size (unit: $\mu$m) of a smallest unit particle recognized when observing the lithium composite transition metal oxide through SEM.

The $D_{EBSD}$ may be obtained by preparing a cross-sectional sample of a positive electrode including a positive electrode active material, obtaining an EBSD image of the cross-sectional sample, and then calculating an average value from grain particle sizes measured through an EBSD analysis program.

Herein, the $D_{SEM}$ indicates an average value of a diameter of circles with the same area (equivalent circular diameter, ECD) as particles separated based on particle boundaries in an SEM image. The $D_{SEM}$ may be measured from a primary particle-level segmented image obtained by image-processing an SEM image using an artificial intelligence model. Specifically, the segmented image may be obtained by obtaining an SEM image of a target positive electrode powder for measurement, inputting the obtained SEM image into an U-NET structure to generate a binary image, converting the binary image into a distance-converted image based on a distance-converted algorithm, filtering the binary image using a threshold value set based on the distance-converted image, identifying a plurality of objects included in the filtered binary image, and then segmenting the SEM image into primary particle units based on the plurality of objects.

The present inventors have found that when a positive electrode active material includes a lithium composite transition metal oxide in the form of a single particle, and the lithium composite transition metal oxide satisfies Equation 1 above, an intergranular interface of the positive electrode active material in the form of a single particle having the Ni content of 60% or greater is obtained at an appropriate level and thus the positive electrode active material is structurally stable and has improved crystallinity compared to a polycrystalline positive electrode active material, and accordingly, when the positive electrode active material is applied to a secondary battery, the battery has enhanced capacity, initial efficiency, and lifetime, and thus have completed the invention.

When the lithium composite transition metal oxide fails to satisfy Equation 1 above, specifically, when a value according to Equation 1 is 0.4 or less, primary particles are not sufficiently aggregated, causing an exaggerated intergranular interface to accelerate degradation during cycles, and when a value according to Equation 1 is 1.0, it is structurally unstable and rather crystallinity decreases.

According to the present invention, the lithium composite transition metal oxide may further satisfy Equation 2 below.

$$[Equation\ 2]$$

$$0.5\ <\ \frac{D_{EBSD}/D_{SEM}}{[Ni]}\ <\ 1.3$$

In Equation 2,

$D_{EBSD}$ is an average particle size (unit: $\mu$m) of a grain recognized when observing the lithium composite transition metal oxide through EBSD,

$D_{SEM}$ is an average particle size (unit: $\mu$m) of a smallest unit particle recognized when observing the lithium composite transition metal oxide through SEM, and

[Ni] is a molar ratio of nickel with respect to the total moles of transition metals excluding lithium.

When the lithium composite transition metal oxide satisfies Equation 2 above, the positive electrode active material has high-capacity characteristics, and thus may have enhanced single-particle structural stability and long-life characteristics.

When the lithium composite transition metal oxide fails to satisfy Equation 2 above, specifically, when a value according to Equation 2 is less than 0.5, an intergranular interface is not sufficient at the same nickel content, resulting in low capacity, and when a value according to Equation 2 is greater than 1.3, even when a sufficient intergranular interface is maintained, low nickel content causes low capacity, and when the nickel content is at the same level, an exaggerated intergranular interface accelerates degradation during repeated battery cycles.

When the lithium composite transition metal oxide has a nickel content of 60 mol% to 80 mol% with respect to the total moles of transition metals excluding lithium, the value according to Equation 2 above may be 0.6 to 1.2. In addition, when the lithium composite transition metal oxide has a nickel content of 80 mol% or greater with respect to the total moles of transition metals excluding lithium, the value according to Equation 2 above may be 0.5 to 0.8.

According to the present invention, the $D_{EBSD}/D_{SEM}$ may have a value of greater than 0.4 and 0.9 or less. Specifically, the $D_{EBSD}/D_{SEM}$ may have a value of greater than 0.4, 0.7 or less, 0.8 or less, or 0.9 or less. When the $D_{EBSD}/D_{SEM}$ value is within the above range, an intergranular interface of the single-particle positive electrode active material is obtained at an appropriate level, while the structure is more stable and the positive electrode active material is structurally stable and has improved crystallinity.

According to the present invention, the $D_{EBSD}$ may be in a range of 1 $\mu$m to 5 $\mu$m. Specifically, the $D_{EBSD}$ may be 1 $\mu$m or greater, 4 $\mu$m or less, or 5 $\mu$m or less.

According to the present invention, the $D_{SEM}$ may be in a range of 1 $\mu$m to 8 $\mu$m. Specifically, the $D_{SEM}$ may be 1

μm or greater, 6 μm or less, 7 μm or less, or 8 μm or less.

According to the present invention, the lithium composite transition metal oxide may have a nickel content of 60 mol% or greater with respect to the total moles of transition metals excluding lithium. Specifically, the lithium composite transition metal oxide may have a nickel content of 60 mol%, 70 mol%, 80 mol% or greater, 97 mol%, 98 mol%, 99 mol% or less with respect to the total moles of transition metals excluding lithium. That is [Ni] may have a value of 0.60, 0.70, 0.80 or greater, 0.97, 0.98, or 0.99 or less.

According to the present invention, the lithium composite transition metal oxide may have a composition represented by Formula 1 below.

[Formula 1]     $Li_x[Ni_aCo_bM1_cM2_d]O_2$

In Formula 1 above,

M1 is at least one selected from Mn and Al,
M2 is at least one selected from Zr, B, W, Mo, Cr, Nb, Mg, Hf, Ta, La, Ti, Sr, Ba, Ce, Sn, Y, V, Ca, Zn, F, P, and S, and $0.9 \leq x \leq 1.2$, $0.6 \leq a < 1$, $0 \leq b \leq 0.4$, $0 \leq c \leq 0.4$, and $0 \leq d \leq 0.4$ are satisfied.

Herein, M2 is a doping element or a coating element.

Herein, x represents a molar ratio of Li with respect to the total moles of transition metals, and may be 0.9 or greater, 0.98 or greater, 0.99 or greater, 1.0 or greater, 1.1 or less, or 1.2 or less.

Herein, a represents a molar ratio of Ni with respect to the total moles of transition metals, and may be 0.6 or greater, 0.7 or greater, 0.8 or greater, 0.97 or less, 0.98 or less, or 0.99 or less.

Herein, b represents a molar ratio of Co with respect to the total moles of transition metals, and may be 0 or greater, greater than 0, 0.2 or less, or 0.4 or less.

Herein, c represents a molar ratio of M1 with respect to the total moles of transition metals, and may be 0 or greater, greater than 0, 0.2 or less, or 0.4 or less.

Herein, d represents a molar ratio of M2 with respect to the total moles of transition metals, and may be 0 or greater, greater than 0, 0.2 or less, or 0.4 or less.

According to the present invention, the lithium composite transition metal oxide may have an average particle size ($D_{50}$) of 1 μm to 10 μm, specifically 1 μm or greater, 6 μm, 8 μm, 10 μm or less. When the average particle size ($D_{50}$) is within the above range, in the case of forming an electrode composed of a lithium composite transition metal oxide in the form of a single particle or a blended electrode composed of a single particle having a large average particle size and a polycrystalline positive electrode material, appropriate packing density properties and rolling ratio may be obtained.

## Positive electrode

The present invention provides a positive electrode including the positive electrode active material.

The positive electrode may include a positive electrode current collector and a positive electrode active material layer formed on the positive electrode current collector, and the positive electrode active material layer may include the above positive electrode active material.

The positive electrode current collector may include a highly conductive metal and is not particularly limited as long as the positive electrode active material layer easily adheres thereto and the positive electrode current collector has no reactivity in the voltage range of a battery. As the positive electrode current collector, for example, stainless steel, aluminum, nickel, titanium, fired carbon, or aluminum or stainless steel that is surface-treated with one of carbon, nickel, titanium, silver, or the like may be used. In addition, the positive electrode current collector may typically have a thickness of 3 μm to 500 μm, and microscopic irregularities may be formed on the surface of the current collector to improve the adhesion of the positive electrode active material. The positive electrode current collector, for example, may be used in various shapes such as that of a film, a sheet, a foil, a net, a porous body, a foam body, a non-woven fabric body, and the like.

The positive electrode active material layer may optionally include a conductive material and a binder in addition to the positive electrode active material, as necessary. In this case, the positive electrode active material may be included in an amount of 80 wt% to 99 wt%, for example, 85 wt% to 98.5 wt% with respect to a total weight of the positive electrode active material layer, and excellent capacity properties may be obtained within this range.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive agent may be included in an amount of 0.1 wt% to 15 wt% with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 0.1 wt% to 15 wt% with respect to the total weight of the positive electrode active material layer.

The positive electrode may be prepared according to a typical method of preparing a positive electrode, except that the positive electrode active material described above is used. Specifically, the positive electrode may be prepared by applying a composition for forming a positive electrode active material layer, which is prepared by dissolving or dispersing the positive electrode active material and optionally a binder, a conductive material, and a dispersant in a solvent, onto a positive electrode current collector, followed by drying and rolling, or may be prepared by casting a separate support with the composition for forming a positive electrode active material layer and then laminating a film separated from the support on the positive electrode current collector.

The solvent may be a solvent commonly used in the art, and may be dimethyl sulfoxide (DMSO), isopropyl alcohol, N-methylpyrrolidone (NMP), dimethylformamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

## Lithium secondary battery

The present invention provides a lithium secondary battery including the positive electrode described above.

The lithium secondary battery may include the positive electrode, a negative electrode, a separator interposed between the positive electrode and the negative electrode, and an electrolyte. In addition, the lithium secondary battery may selectively further include a battery case for accommodating an electrode assembly composed of the positive electrode, the negative electrode, and the separator, and a sealing member for sealing the battery case.

The negative electrode may include a negative electrode current collector, and a negative electrode active material layer disposed on the negative electrode current collector.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminumcadmium alloy, and the like may be used. In addition, the negative electrode current collector may typically have a thickness of 3 $\mu$m to 500 $\mu$m, and as in the case of the positive electrode current collector, fine irregularities may be formed on a surface of the negative electrode current collector to improve the adhesion of the negative electrode active material. The negative electrode current collector, for example, may be used in various shapes such as that of a film, a sheet, a foil, a net, a porous body, a foam body, a non-woven fabric body, and the like.

The negative electrode active material layer may optionally include a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta(0<\beta<2)$, $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, as the negative electrode active material, a lithium metal thin film may be used. Furthermore, both low crystalline carbon and high crystalline carbon may be used as the carbon material. Typical examples of the low-crystalline carbon may be soft carbon and hard carbon, and typical examples of the highcrystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes. The negative electrode active material may be included in an amount of 80 wt% to 99 wt% with respect to a total weight of the negative electrode active material layer.

The binder of the negative electrode active material layer is a component that assists in the binding between the conductive agent, the active material, and the current collector, and is commonly added in an amount of 0.1 wt% to 10 wt% with respect to the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive material of the negative electrode active material layer is a component for further improving the conductivity of a negative electrode active material, and may be added in an amount of 10 wt% or less, preferably 5 wt% or less, with respect to the total weight of a negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

The negative electrode may be prepared by applying a composition for forming a negative electrode active material layer, which is prepared by dissolving or dispersing a negative electrode active material and optionally a binder and a conductive material in a solvent, on a negative electrode current collector, followed by drying, or may be prepared by casting a composition for forming a negative electrode active material layer on a separate support and then laminating a film separated from the support on the negative electrode current collector.

The separator separates the negative electrode and the positive electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation. As a specifically example, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where Ra is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

The lithium secondary battery including the positive electrode active material according to the present invention stably exhibits excellent capacity properties, output properties, and lifespan properties, and thus, are useful for portable devices such as a mobile phone, a notebook computer, and a digital camera, and in the field of electric cars such as a hybrid electric vehicle (HEV) and an electric vehicle (EV).

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

Accordingly, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

## MODE FOR CARRYING OUT THE INVENTION

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

## Example

### Example 1

A complex transition metal hydroxide (composition: $Ni_{0.86}Co_{0.05}Mn_{0.09}(OH)_2$, average particle size ($D_{50}$) : 4 $\mu$m) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.05, and the mixture was subjected to primary firing at 890 °C for 6 hours in an oxygen atmosphere to prepare a pre-fired product. The pre-fired product was pulverized to an average particle size ($D_{50}$) of 4 $\mu$m, and then subjected to secondary firing at 820 °C for 9 hours in an oxygen atmosphere to prepare a single-particle lithium composite transition metal oxide (composition: $LiNi_{0.86}CO_{0.05}Mn_{0.09}O_2$) (positive electrode active material).

### Example 2

A complex transition metal hydroxide (composition: $Ni_{0.93}CO_{0.05}Mn_{0.02}(OH)_2$, average particle size ($D_{50}$) : 4 $\mu$m) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.05, and the mixture was subjected to primary firing at 850 °C for 6 hours in an oxygen atmosphere to prepare a pre-fired product. The pre-fired product was pulverized to an average particle size ($D_{50}$) of 4 $\mu$m, and then subjected to secondary firing at 750 °C for 9 hours in an oxygen atmosphere to prepare a single-particle lithium composite transition metal oxide (composition: $LiNi_{0.932}C_{0.05}Mn_{0.02}O_2$) (positive electrode active material).

### Example 3

A complex transition metal hydroxide (composition: $Ni_{0.86}Co_{0.05}Mn_{0.09}(OH)_2$, average particle size ($D_{50}$) : 4 $\mu$m) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.05, and the mixture was subjected to primary firing at 860 °C for 6 hours in an oxygen atmosphere to prepare a pre-fired product. The pre-fired product was pulverized to an average particle size ($D_{50}$) of 4 $\mu$m, and then subjected to secondary firing at 820 °C for 9 hours in an oxygen atmosphere to prepare a single-particle lithium composite transition metal oxide (composition: $LiNi_{0.86}CO_{0.05}Mn_{0.09}O_2$) (positive electrode active material).

**Example 4**

A complex transition metal hydroxide (composition: $Ni_{0.93}Co_{0.05}Mn_{0.02}(OH)_2$, average particle size ($D_{50}$) : 4 μm) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.05, and the mixture was subjected to primary firing at 830 °C for 6 hours in an oxygen atmosphere to prepare a pre-fired product. The pre-fired product was pulverized to an average particle size ($D_{50}$) of 4 μm, and then subjected to secondary firing at 750 °C for 9 hours in an oxygen atmosphere to prepare a single-particle lithium composite transition metal oxide (composition: $LiNi_{0.932}C_{0.05}Mn_{0.02}O_2$) (positive electrode active material).

**Example 5**

A complex transition metal hydroxide (composition: $Ni_{0.62}CO_{0.08}Mn_{0.30}(OH)_2$, average particle size ($D_{50}$) : 4 μm) precursor and a lithium raw material, $Li_2CO_3$, were mixed such that a ratio of the total moles of transition metals (Ni+Co+Mn) included in the complex transition metal hydroxide to the moles of lithium (Li) included in $Li_2CO_3$, ((Ni+Co+Mn):Li), was set to 1:1.07, and the mixture was subjected to primary firing at 970 °C for 6 hours in an oxygen atmosphere to prepare a pre-fired product. The pre-fired product was pulverized to an average particle size ($D_{50}$) of 4 μm, and then subjected to secondary firing at 870 °C for 9 hours in an oxygen atmosphere to prepare a single-particle lithium composite transition metal oxide (composition: $LiNi_{0.62}Co_{0.08}Mn_{0.30}O_2$) (positive electrode active material).

**Example 6**

A complex transition metal hydroxide (composition: $Ni_{0.68}Co_{0.10}Mn_{0.22}(OH)_2$, average particle size ($D_{50}$) : 4 μm) precursor and a lithium raw material, $Li_2CO_3$, were mixed such that a ratio of the total moles of transition metals (Ni+Co+Mn) included in the complex transition metal hydroxide to the moles of lithium (Li) included in $Li_2CO_3$, ((Ni+Co+Mn):Li), was set to 1:1.05, and the mixture was subjected to primary firing at 920 °C for 6 hours in an oxygen atmosphere to prepare a pre-fired product. The pre-fired product was pulverized to an average particle size ($D_{50}$) of 4 μm, and then subjected to secondary firing at 850 °C for 9 hours in an oxygen atmosphere to prepare a single-particle lithium composite transition metal oxide (composition: $LiNi_{0.68}Co_{0.10}Mn_{0.22}O_2$) (positive electrode active material).

**Comparative Example 1**

A complex transition metal hydroxide (composition: $Ni_{0.86}Co_{0.05}Mn_{0.09}(OH)_2$, average particle size ($D_{50}$) : 4 μm) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.03, and the mixture was subjected to primary firing at 800 °C for 6 hours in an oxygen atmosphere to prepare a pre-fired product. The pre-fired product was pulverized to an average particle size ($D_{50}$) of 4 μm, and then subjected to secondary firing at 780 °C for 9 hours in an oxygen atmosphere to prepare a single-particle lithium composite transition metal oxide (composition: $LiNi_{0.86}CO_{0.05}Mn_{0.09}O_2$) (positive electrode active material).

**Comparative Example 2**

A complex transition metal hydroxide (composition: $Ni_{0.93}Co_{0.05}Mn_{0.02}(OH)_2$, average particle size ($D_{50}$) : 4 μm) precursor and a lithium raw material, LiOH, were mixed such that a ratio of the total moles of transition metals (Ni+Co+Mn) included in the complex transition metal hydroxide to the moles of lithium (Li) included in LiOH, ((Ni+Co+Mn):Li), was set to 1:1.03, and the mixture was subjected to primary firing at 850 °C for 9 hours in an oxygen atmosphere to prepare a pre-fired product. The pre-fired product was pulverized to an average particle size ($D_{50}$) of 4 μm, and then subjected to secondary firing at 750 °C for 9 hours in an oxygen atmosphere to prepare a single-particle lithium composite transition metal oxide (composition: $LiNi_{0.932}C_{0.05}Mn_{0.02}O_2$) (positive electrode active material).

**Comparative Example 3**

A complex transition metal hydroxide (composition: $Ni_{0.62}Co_{0.08}Mn_{0.30}(OH)_2$, average particle size ($D_{50}$) : 4 μm) precursor and a lithium raw material, $Li_2CO_3$, were mixed such that a ratio of the total moles of transition metals (Ni+Co+Mn) included in the complex transition metal hydroxide to the moles of lithium (Li) included in $Li_2CO_3$,

((Ni+Co+Mn):Li), was set to 1:1.03, and the mixture was subjected to primary firing at 900 °C for 6 hours in an oxygen atmosphere to prepare a pre-fired product. The pre-fired product was pulverized to an average particle size ($D_{50}$) of 4 μm, and then subjected to secondary firing at 850 °C for 9 hours in an oxygen atmosphere to prepare a single-particle lithium composite transition metal oxide (composition: $LiNi_{0.62}CO_{0.08}Mn_{0.30}O_2$) (positive electrode active material).

**Experimental Example**

Experimental Example 1

Using a field emission scanning electron microscope (FE-SEM, FEI Quanta 250 FEG), SEM images of the positive electrode active materials each prepared in Examples 1 to 6 and Comparative Examples 1 to 3 were obtained. Then, each image was image-processed using the particle shape analysis method described above to obtain a primary particle-level segmented image, and then $D_{SEM}$ was measured from the image.

In addition, the positive electrode active materials each prepared in Examples 1 to 6 and Comparative Examples 1 to 3, carbon black (Denka, DenkaBlack) a conductive material, and a PVdF (Kureha, KF1100) binder were mixed in a weight ratio of 7:2:1 in NMP (DAEJUNG CHEMICALS & METALS CO., LTD.) solvent to prepare a positive electrode slurry. The positive electrode slurry was applied onto one surface of an aluminum current collector, dried at 120 °C, and rolled to prepare a positive electrode. Each positive electrode was subjected to Ar ion milling for 2 hours using an ion milling system (JEOL, IB-19520CCP) (acceleration voltage: 6 kV) to prepare cross-sectional samples. For each of these cross-sectional samples, EBSD images were obtained using EBSD (JEOL JSM-7900F with Symmetry EBSD detector (Oxford Instruments)). Using the EBSD program of Aztec Crystal, $D_{EBSD}$ was obtained from the EBSD images.

The values according to Equations 1 and 2 described herein obtained using the $D_{SEM}$ and $D_{EBSD}$ from each image are shown in Table 1 below.

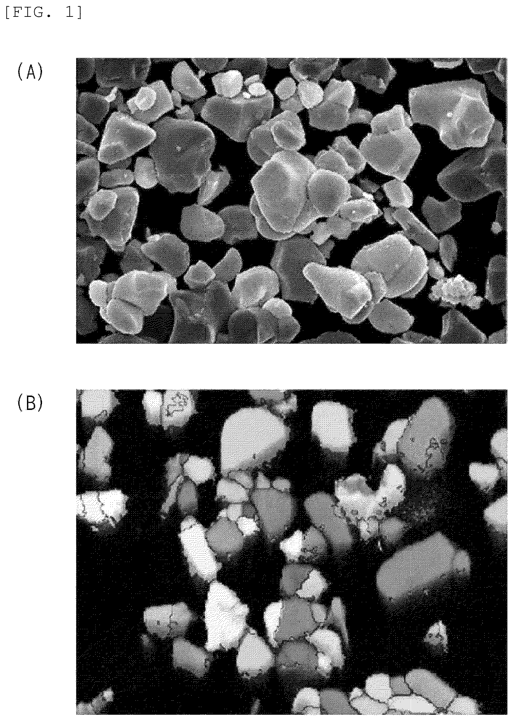

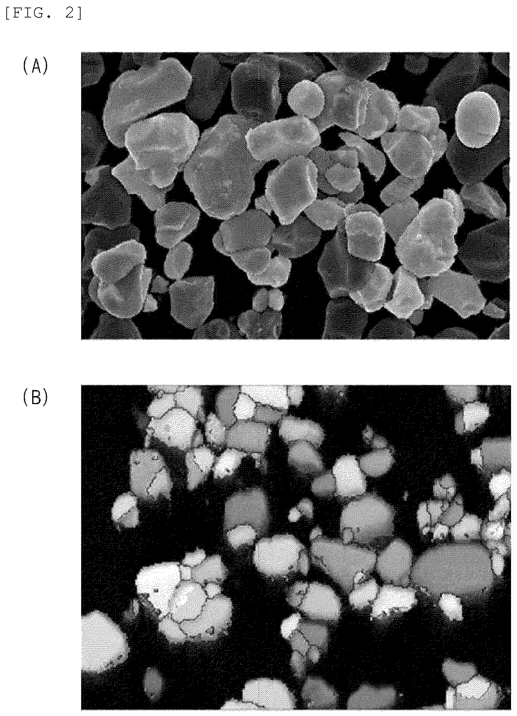

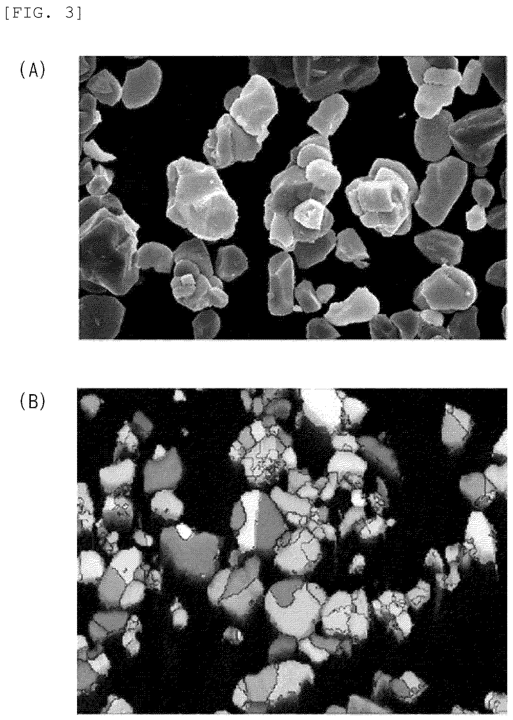

FIGS. 1 to 3 sequentially present a segmented image obtained by image-processing an SEM image (A) of the positive electrode active materials each from Examples 1 and 2 and Comparative Example 1, and an EBSD IPF map image (B).

In this case, $D_{EBSD}$ is an average particle size of a grain recognized when observing the lithium composite transition metal oxide through EBSD, $D_{SEM}$ is an average particle size of a smallest unit particle recognized when observing the lithium composite transition metal oxide through SEM, and [Ni] is a molar ratio of nickel with respect to the total moles of transition metals excluding lithium.

[Table 1]

|  | $D_{EBSD}/D_{SEM}$ | $(D_{EBSD}/D_{SEM})$ / [Ni] |
|---|---|---|
| Example 1 | 0.54 | 0.628 |
| Example 2 | 0.63 | 0.677 |
| Example 3 | 0.50 | 0.581 |
| Example 4 | 0.56 | 0.602 |
| Example 5 | 0.70 | 1.13 |
| Example 6 | 0.42 | 0.617 |
| Comparative Example 1 | 0.40 | 0.465 |
| Comparative Example 2 | 1.0 | 0.419 |
| Comparative Example 3 | 0.37 | 0.597 |

**Experimental Example 2: Evaluation of battery performance**

The positive electrode active materials each prepared in Examples 1 to 6 and Comparative Examples 1 to 3, a carbon black conductive material, and a polyvinylidene fluoride (PVDF) binder were mixed at a ratio of 95:3:2 in an N-methylpyrrolidone (NMP) solvent to prepare a positive electrode slurry. The positive electrode slurry was applied onto one surface of an aluminum current collector, dried at 120 °C, and rolled to prepare a positive electrode.

A lithium metal electrode was used as a negative electrode, a porous polyethylene separator was interposed between the positive electrode and the negative electrode to prepare an electrode assembly, and the electrode assembly was placed inside a battery case. Thereafter, an electrolyte solution was injected into the case to prepare half-cells.

Each half-cell prepared in this way was charged at 0.1 C in CC-CV mode at 25 °C up to 4.25 V (cut-off current: 0.05 C), discharged at a constant current of 0.1 C up to 2.5 V to measure initial charge capacity and initial discharge capacity, and initial efficiency was calculated, and the results are shown in Table 2 below.

Then, the cell, after completing one cycle, was transferred to a 45 °C chamber, and subjected to 30 cycles of charge and discharge at 0.33 C to measure the capacity of a lithium secondary battery, and the percentage of the 30th cycle discharge capacity to the 1st cycle discharge capacity was used as capacity retention, and the results are shown in Table 2 below.

[Table 2]

| Item | Initial charge capacity (mAh/g) | Initial discharge capacity (mAh/g) | Initial efficiency (%) | Capacity retention rate (%) |
|---|---|---|---|---|
| Example 1 | 232.7 | 205.5 | 88.3 | 97.5 |
| Example 2 | 240.0 | 212.8 | 88.7 | 93.8 |
| Example 3 | 232.2 | 204.8 | 88.2 | 97.2 |
| Example 4 | 240.5 | 213.1 | 88.6 | 92.6 |
| Example 5 | 220.2 | 200.3 | 90.9 | 97.3 |
| Example 6 | 226.3 | 206.6 | 91.3 | 95.2 |
| Comparative Example 1 | 230.8 | 202.8 | 87.9 | 96.1 |
| Comparative Example 2 | 236.5 | 210.4 | 89.0 | 90.8 |
| Comparative Example 3 | 218.2 | 196.7 | 90.1 | 91.8 |

Referring to Tables 1 and 2, batteries including the positive electrode active materials of Examples 1 to 6 are found to have excellent capacity, initial efficiency, and life performance by satisfying Equation 1 described herein. On the other hand, a battery including the positive electrode active material of Comparative Example 1 is found to have poor capacity, initial efficiency, and life performance as compared to the batteries including the positive electrode active materials of Examples 1 and 3, which have similar compositions. In addition, a battery including the positive electrode active material of Comparative Example 2 is found to have poor capacity and life performance as compared to the batteries including the positive electrode active materials of Examples 2 and 4, which have similar compositions. In addition, a battery including the positive electrode active material of Comparative Example 3 is found to have poor capacity, initial efficiency, and life performance as compared to the batteries including the positive electrode active materials of Examples 5 and 6, which have similar compositions.

## Claims

1. A positive electrode active material comprising a lithium composite transition metal oxide in the form of a single particle,

   wherein the lithium composite transition metal oxide satisfies Equation 1 below:

   [Equation 1]

   $$0.4 < \frac{D_{EBSD}}{D_{SEM}} < 1.0$$

   wherein in Equation 1 above,
   $D_{EBSD}$ is an average particle size (unit: $\mu m$) of a grain recognized when observing the lithium composite transition metal oxide through EBSD, and
   $D_{SEM}$ is an average particle size (unit: $\mu m$) of a smallest unit particle recognized when observing the lithium composite transition metal oxide through SEM.

2. The positive electrode active material of claim 1, wherein the lithium composite transition metal oxide further satisfies Equation 2 below:

[Equation 2]

$$0.5 < \frac{D_{EBSD}/D_{SEM}}{[Ni]} < 1.3$$

wherein in Equation 2 above,

$D_{EBSD}$ is an average particle size (unit: $\mu$m) of a grain recognized when observing the lithium composite transition metal oxide through EBSD,
$D_{SEM}$ is an average particle size (unit: $\mu$m) of a smallest unit particle recognized when observing the lithium composite transition metal oxide through SEM, and
[Ni] is a molar ratio of nickel with respect to the total moles of transition metals excluding lithium.

3. The positive electrode active material of claim 1, wherein the $D_{EBSD}/D_{SEM}$ has a value of greater than 0.4 and 0.9 or less.

4. The positive electrode active material of claim 1, wherein the $D_{EBSD}$ is in a range of 1 $\mu$m to 5 $\mu$m.

5. The positive electrode active material of claim 1, wherein the $D_{SEM}$ is in a range of 1 $\mu$m to 8 $\mu$m.

6. The positive electrode active material of claim 1, wherein the lithium composite transition metal oxide has a nickel content of 60 mol% or greater with respect to the total moles of transition metals excluding lithium.

7. The positive electrode active material of claim 1, wherein the lithium composite transition metal oxide has a composition represented by Formula 1 below:

[Formula 1] $Li_x[Ni_aCo_bM1_cM2_d]O_2$ wherein in Formula 1 above,

M1 is at least one selected from Mn and Al,
M2 is at least one selected from Zr, B, W, Mo, Cr, Nb, Mg, Hf, Ta, La, Ti, Sr, Ba, Ce, Sn, Y, V, Ca, Zn, F, P, and S, and
$0.9 \leq x \leq 1.2$, $0.6 \leq a < 1$, $0 \leq b \leq 0.4$, $0 \leq c \leq 0.4$, and $0 \leq d \leq 0.4$ are satisfied.

8. The positive electrode active material of claim 1, wherein the lithium composite transition metal oxide has an average particle size ($D_{50}$) of 1 $\mu$m to 10 $\mu$m.

9. A positive electrode comprising the positive electrode active material according to any one of claims 1 to 8.

10. A lithium secondary battery comprising the positive electrode according to claim 9.

[FIG. 1]

(A)

(B)

[FIG. 2]

(A)

(B)

[FIG. 3]

(A)

(B)

## INTERNATIONAL SEARCH REPORT

| International application No. |
| --- |
| **PCT/KR2024/007825** |

| A. | CLASSIFICATION OF SUBJECT MATTER |
| --- | --- |

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathode active materials), 단입자 (single particle), 전자 후방 산란 회절 (EBSD; Electron Backscatter Diffraction), 주사전자현미경 (SEM, Scanning Electron Microscope), 고 니켈 (high nickel)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2022-0041032 A (LG CHEM, LTD.) 31 March 2022 (2022-03-31)<br>See abstract; paragraphs [0067]-[0072]; and claims 1-12. | 1-10 |
| A | KR 10-2022-0163061 A (SAMSUNG SDI CO., LTD.) 09 December 2022 (2022-12-09)<br>See abstract; and paragraphs [0181]-[0193]. | 1-10 |
| A | KR 10-2018-0059736 A (POSCO et al.) 05 June 2018 (2018-06-05)<br>See abstract; and claims 1-14. | 1-10 |
| A | KR 10-2020-0047117 A (LG CHEM, LTD.) 07 May 2020 (2020-05-07)<br>See abstract; paragraphs [0136]-[0142]; and claims 1-18. | 1-10 |
| A | EP 4145566 A1 (BEIJING EASPRING MATERIAL TECHNOLOGY CO., LTD.) 08 March 2023 (2023-03-08)<br>See abstract; and claims 1-18. | 1-10 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 September 2024** | **24 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007825**

| Patent document cited in search report | | | Publication date (day/month/year) | Patent family member(s) | | | Publication date (day/month/year) |
|---|---|---|---|---|---|---|---|
| KR | 10-2022-0041032 | A | 31 March 2022 | CN | 115529825 | A | 27 December 2022 |
| | | | | CN | 115529825 | B | 08 March 2024 |
| | | | | EP | 4137460 | A1 | 22 February 2023 |
| | | | | JP | 2023-521317 | A | 24 May 2023 |
| | | | | JP | 7476344 | B2 | 30 April 2024 |
| | | | | KR | 10-2498355 | B1 | 10 February 2023 |
| | | | | US | 2023-0290942 | A1 | 14 September 2023 |
| | | | | WO | 2022-065935 | A1 | 31 March 2022 |
| KR | 10-2022-0163061 | A | 09 December 2022 | CN | 115440948 | A | 06 December 2022 |
| | | | | EP | 4098626 | A1 | 07 December 2022 |
| | | | | US | 2022-0388865 | A1 | 08 December 2022 |
| KR | 10-2018-0059736 | A | 05 June 2018 | KR | 10-2017-0076348 | A | 04 July 2017 |
| | | | | KR | 10-2295296 | B1 | 27 August 2021 |
| KR | 10-2020-0047117 | A | 07 May 2020 | US | 12040484 | B2 | 16 July 2024 |
| | | | | US | 2020-0136141 | A1 | 30 April 2020 |
| EP | 4145566 | A1 | 08 March 2023 | CN | 115548277 | A | 30 December 2022 |
| | | | | JP | 2023-516229 | A | 18 April 2023 |
| | | | | JP | 7313578 | B2 | 24 July 2023 |
| | | | | KR | 10-2023-0005894 | A | 10 January 2023 |
| | | | | KR | 10-2640467 | B1 | 23 February 2024 |
| | | | | US | 2023-0207802 | A1 | 29 June 2023 |
| | | | | US | 2023-0268498 | A1 | 24 August 2023 |
| | | | | WO | 2022-198891 | A1 | 29 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230076837